(19) Europäisches Patentamt
European Patent Office
Office européen des brevets

(11) EP 1 137 020 A1

(12) **EUROPEAN PATENT APPLICATION**
published in accordance with Art. 158(3) EPC

(43) Date of publication:
**26.09.2001 Bulletin 2001/39**

(21) Application number: **99951200.7**

(22) Date of filing: **01.11.1999**

(51) Int Cl.[7]: **H01G 9/028**

(86) International application number:
**PCT/JP99/06095**

(87) International publication number:
**WO 00/30133 (25.05.2000 Gazette 2000/21)**

(84) Designated Contracting States:
**AT BE CH CY DE DK ES FI FR GB GR IE IT LI LU MC NL PT SE**

(30) Priority: **16.11.1998 JP 35546698**
**16.11.1998 JP 35546798**

(71) Applicant: **Sanyo Electric Co., Ltd.**
**Moriguchi-shi, Osaka-fu 570-8677 (JP)**

(72) Inventors:
- **FUJIMOTO, Masahisa, Sanyo Electric Co. Ltd.**
**Moriguchi-shi, Osaka 570-8677 (JP)**
- **FUJITANI, Shin, Sanyo Electric Co. Ltd.**
**Moriguchi-shi, Osaka 570-8677 (JP)**
- **NISHIO, Koji, Sanyo Electric Co. Ltd.**
**Moriguchi-shi, Osaka 570-8677 (JP)**

(74) Representative: **VOSSIUS & PARTNER**
**Siebertstrasse 4**
**81675 München (DE)**

# (54) SOLID ELECTROLYTIC CAPACITOR

(57) The solid electrolytic capacitor of this invention includes an anode; a dielectric film formed on the anode by anodic oxidation; a solid electrolytic layer formed on the dielectric film; and a cathode connected with the solid electrolytic layer, and the solid electrolytic layer is made from a conducting polymer obtained by doping, with dodecylbenzene sulfonic acid ions or alkylnaphthalene sulfonic acid ions with a carbon number of an alkyl group of 4 through 24 and sulfuric acid ions, a polymer that includes a heterocyclic monomer unit represented by the following general formula as a repeating unit:

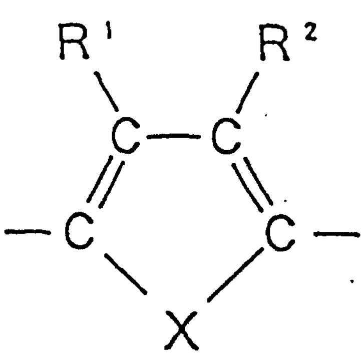

The solid electrolytic capacitor of this invention has large capacitance and exhibits low impedance in a high frequency region.

Fig. 1

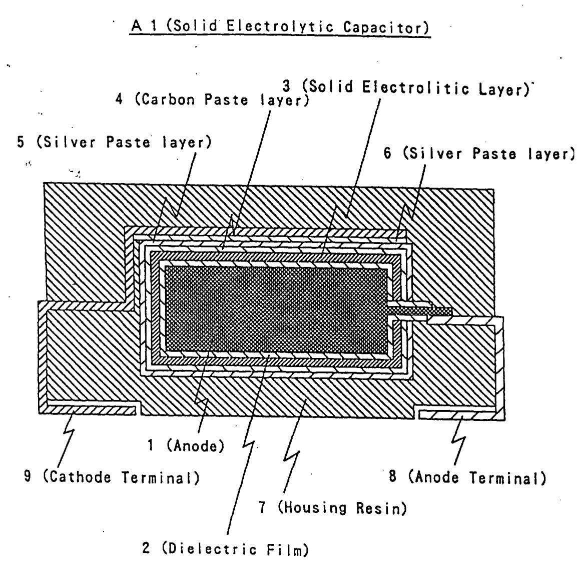


EP 1 137 020 A1

## Description

Technical Field

The present invention relates to a solid electrolytic capacitor comprising a solid electrolytic layer of a conducting polymer formed on a dielectric film, and in particular, it relates to improvement of the solid electrolytic layer for the purpose of providing a solid electrolytic capacitor having large capacitance and exhibiting low impedance in a high frequency region.

Background Art

In accordance with recent trend in reducing the size and weight of electronic equipment, there are increasing demands for a compact capacitor having large capacitance and exhibiting low impedance in a high frequency region.
Capacitors conventionally used in a high frequency region are a plastic capacitor, a mica capacitor and a laminated ceramic capacitor, all of which are large in size and have capacitance difficult to increase.
As a capacitor having large capacitance, an electrolytic capacitor is well known. Examples of the electrolytic capacitor are an electrolytic capacitor using an electrolyte (such as an aluminum electrolytic capacitor) and a solid electrolytic capacitor using manganese dioxide (such as an aluminum solid electrolytic capacitor and a tantalum solid electrolytic capacitor).
These electrolytic capacitors have, however, high impedance in a high frequency region because of high electric resistance of an electrolyte or a solid electrolyte used therein.
Recently, a conducting polymer prepared by doping a polymer, such as polypyrrole and polythiophene, which is obtained by electrolytically polymerizing a heterocyclic monomer such as pyrrole and thiophene, with $BF_4^-$ (borofluoride ions) or $ClO_4^-$ (perchlorate ions) has been proposed as a solid electrolyte usable instead of manganese dioxide (Japanese Laid-Open Patent Publication No. 60-37114/1985).
The conducting polymer obtained by using the aforementioned halogen anions as a dopant, however, can easily degrade a dielectric film. In addition, the conducting property of the conducting polymer can be easily lowered because it is poor in thermal stability and can be easily undoped. The conducting polymer can be easily undoped particularly in fixing an electrode at a high temperature of approximately 200°C.
The degradation of the dielectric film and the lowering of the conducting property of the conducting polymer can increase a leakage current in a capacitor, resulting in reducing the capacitance and increasing the impedance.
A conducting polymer obtained by using aryl sulfonic acid ions, such as dodecylbenzene sulfonic acid ions and naphthalene sulfonic acid ions, as a dopant has been proposed for overcoming the aforementioned disadvantages (Japanese Laid-Open Patent Publication No. 64-49211/1989).
The conducting polymer obtained by using aryl sulfonic acid ions as a dopant has still rather high electric resistance although the electric resistance is lower than that of the conducting polymer obtained by using $BF_4^-$ and $ClO_4^-$ as a dopant. Therefore, even when this conducting polymer is used as a solid electrolyte, it is difficult to obtain a solid electrolytic capacitor exhibiting low impedance in a high frequency region.
The present invention was devised in view of these conventional disadvantages, and a main object of the invention is providing a solid electrolytic capacitor having large capacitance and exhibiting low impedance in a high frequency region.

Disclosure of Invention

The solid electrolytic capacitor (first capacitor) according to the invention comprises an anode; a dielectric film formed on the anode through anodic oxidation; a solid electrolytic layer formed on the dielectric film from a conducting polymer obtained by doping, with dodecylbenzene sulfonic acid ions and sulfuric acid ions, a polymer that includes a heterocyclic monomer unit represented by the following general formula as a repeating unit; and a cathode connected with the solid electrolytic layer:

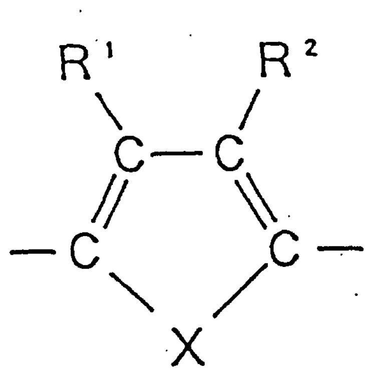

wherein $R^1$ and $R^2$ independently indicate an alkyl group or H; and X indicates S or $NR^3$ (wherein $R^3$ indicates an alkyl group or H).

The solid electrolytic layer is preferably formed through electrolytic polymerization using, as a solution for electrolytic polymerization, an aqueous solution including a heterocyclic monomer such as pyrrole and thiophene and an ionic dopant such as dodecylbenzene sulfonic acid ions because the dopant can be uniformly doped in the polymer in this manner.

The conducting polymer is preferably doped in a ratio of one ion of the dopant per 2 through 5 heterocyclic monomer units each represented by the above-described formula. The molar ratio between the sulfuric acid ions and the dodecylbenzene sulfonic acid ions used for doping in the electrolytic polymerization is not herein specified but is preferably 10:1 through 0.1:10. It is confirmed through experiments that the sulfuric acid ions cannot be doped in a molar ratio exceeding the upper limit ratio of 10:1. On the other hand, although the sulfuric acid ions can be doped in a molar ratio smaller than the lower limit ratio of 0.1:10, such a small ratio is not preferable because it results in increase of impedance in a high frequency region.

As the material for the anode, aluminum or tantalum is preferred because a dielectric obtained through the anodic oxidation of such a material has a high dielectric constant and a high electrical insulating property. Since the dielectric film is formed through the anodic oxidation, when the anode is made from aluminum or tantalum, the dielectric film is formed from an oxide of aluminum or tantalum.

The dopant used in the fabrication of the first capacitor is not halogen anions such as $BF_4^-$ and $ClO_4^-$ but non-halogen anions, and hence, the dielectric film is difficult to degrade. Also, the dodecylbenzene sulfonic acid ions and the sulfuric acid ions exhibit higher thermal stability even when they are exposed to a high temperature, for example, in fixing an electrode and are difficult to undope as compared with $BF_4^-$ and $ClO_4^-$, and hence, the lowering of the conducting property of the conducting polymer is minimal. Accordingly, the first capacitor has a small leakage current and is minimally degraded in its characteristics even when exposed to a high temperature. Furthermore, the conducting polymer including both the dodecylbenzene sulfonic acid ions and the sulfuric acid ions as the dopant has lower electric resistance as compared with a conducting polymer including the dodecylbenzene sulfonic acid ions alone as the dopant. Therefore, the first capacitor exhibits lower impedance in a high frequency region and is better in the frequency characteristic than a solid electrolytic capacitor disclosed in Japanese Laid-Open Patent Publication No. 64-49211/1989.

The other solid electrolytic capacitor (second capacitor) according to the invention comprises an anode; a dielectric film formed on the anode through anodic oxidation; a solid electrolytic layer formed on the dielectric film from a conducting polymer obtained by doping, with alkylnaphthalene sulfonic acid ions with a carbon number of an alkyl group of 4 through 24 and sulfuric acid ions, a polymer that includes a heterocyclic monomer unit represented by the following general formula as a repeating unit; and a cathode connected with the solid electrolytic layer:

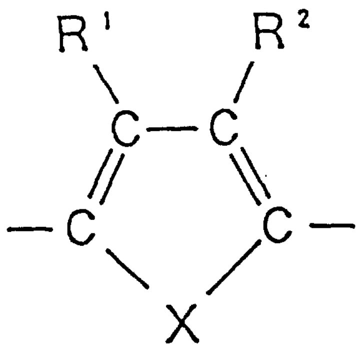

wherein $R^1$ and $R^2$ independently indicate an alkyl group or H; and X indicates S or $NR^3$ (wherein $R^3$ indicates an alkyl group or H).

The solid electrolytic layer is preferably formed through electrolytic polymerization using, as a solution for electrolytic polymerization, an aqueous solution including a heterocyclic monomer such as pyrrole and thiophene and an ionic dopant such as alkylnaphthalene sulfonic acid ions because the dopant can be uniformly doped in the polymer in this manner.

The conducting polymer is preferably doped in a ratio of one ion of the dopant per 2 through 5 heterocyclic monomer units each represented by the above-described formula. The molar ratio between the sulfuric acid ions and the alkylnaphthalene sulfonic acid ions used for doping in the electrolytic polymerization is not herein specified but is preferably 10:1 through 0.1:10. It is confirmed through experiments that the sulfuric acid ions cannot be doped in a molar ratio exceeding the upper limit ratio of 10:1. On the other hand, although the sulfuric acid ions can be doped in a molar ratio smaller than the lower limit ratio of 0.1:10, such a small ratio is not preferable because it results in increase of impedance in a high frequency region.

As the material for the anode, aluminum or tantalum is preferred because a dielectric obtained through the anodic oxidation of such a material has a high dielectric constant and a high electrical insulating property. Since the dielectric film is formed through the anodic oxidation, when the anode is made from aluminum or tantalum, the dielectric film is formed from an oxide of aluminum or tantalum.

The dopant used in the fabrication of the second capacitor is not halogen anions such as $BF_4^-$ and $ClO_4^-$ but non-halogen anions, and hence, the dielectric film is difficult to degrade. Also, the alkylnaphthalene sulfonic acid ions and the sulfuric acid ions exhibit higher thermal stability even when they are exposed to a high temperature, for example, in fixing an electrode and are difficult to undope as compared with $BF_4^-$ and $ClO_4^-$, and hence, the lowering of the conducting property of the conducting polymer is minimal. Accordingly, the second capacitor has a small leakage current and is minimally degraded in its characteristics even when exposed to a high temperature. Furthermore, the conducting polymer including both the alkylnaphthalene sulfonic acid ions and the sulfuric acid ions as the dopant has lower electric resistance as compared with a conducting polymer including the alkylnaphthalene sulfonic acid ions alone as the dopant. Therefore, the second capacitor exhibits lower impedance in a high frequency region and is better in the frequency characteristic than the solid electrolytic capacitor disclosed in Japanese Laid-Open Patent Publication No. 64-49211/1989.

Brief Description of Drawings

Figure 1 is a sectional view of a solid electrolytic capacitor fabricated in an embodiment.

Preferred Embodiments

The present invention will now be described in detail on the basis of preferred embodiments thereof, and it is noted that the invention is not limited to the following embodiments but can be practiced with appropriate modification without departing from the scope of the invention.

Embodiment 1

Porous sintered tantalum was subjected to anodic oxidation, thereby forming a dielectric film of tantalum oxide on the surface thereof. Then, the sintered tantalum bearing the dielectric film thereon was immersed in an aqueous solution including 20 wt% of hydrogen peroxide (oxidizing agent) and 1 wt% of sulfuric acid for 30 minutes, taken out

of the solution, dried for 5 minutes at room temperature, and exposed to pyrrole vapor for 30 minutes, thereby forming a polypyrrole film (vapor phase polymerized film) on the dielectric film. Since this polypyrrole film is doped with sulfuric acid ions, the polypyrrole film is provided with a conducting property. Subsequently, the sintered tantalum bearing the polypyrrole film formed on the dielectric film was immersed in a solution for electrolytic polymerization (an aqueous solution including 0.2 M of pyrrole, 0.06 M of sodium dodecylbenzenesulfonate and 0.0003 M of sulfuric acid), so as to be subjected to electrolytic polymerization (electrolytic oxidative polymerization) at a constant current, with a lead (anode) of stainless steel fixed on the polypyrrole film. Thus, a solid electrolytic layer of a conducting polymer obtained by doping polypyrrole with dodecylbenzene sulfonic acid ions and sulfuric acid ions was formed on the polypyrrole film. Also as a counter electrode (cathode), a stainless steel electrode was used. Next, after the sintered tantalum bearing the solid electrolytic layer formed on the polypyrrole film was washed with water and dried, a carbon paste and a silver paste were successively applied on the solid electrolytic layer in this order. The silver paste was provided with a cathode terminal of aluminum, a terminal portion (bare portion) of the sintered tantalum was provided with an anode terminal of aluminum, and a main body of the resultant capacitor excluding portions for taking out electric energy of the cathode terminal and the anode terminal was housed in an epoxy resin. Thus, a solid electrolytic capacitor A1 (first capacitor) was fabricated.

Figure 1 is a schematic sectional view of the solid electrolytic capacitor A1 fabricated in this embodiment. The solid electrolytic capacitor A1 shown comprises an anode (of sintered tantalum) 1, a dielectric film (of tantalum oxide) 2, a solid electrolytic layer 3, a carbon paste layer 4, a silver paste layer 5, a silver paste layer 6, a housing resin (epoxy resin) 7, an anode terminal 8, a cathode terminal 9 and the like. The anode 1 is provided with a rough surface by electrolytic polishing, and the dielectric film 2 is formed on the rough surface of the anode 1 by the anodic oxidation. On the dielectric film 2, the solid electrolytic layer 3 is formed by the electrolytic polymerization, and the solid electrolytic layer 3 is connected with a cathode including the carbon paste layer 4, the silver paste layer 5 and the silver paste layer 6. The anode terminal 8 is connected with the anode 1 and the cathode terminal 9 is connected with the silver paste layer 6, so that electric energy stored in the solid electrolytic capacitor A1 by charge can be taken out through these terminals. The entire main body of the solid electrolytic capacitor A1 is housed in the housing resin 7 with parts of the anode terminal 8 and the cathode terminal 9 exposed.

<u>Embodiment 2</u>

A solid electrolytic capacitor A2 (first capacitor) was fabricated in the same manner as in Embodiment 1 except that an aqueous solution including 0.2 M of pyrrole, 0.06 M of sodium dodecylbenzenesulfonate and 0.003 M of nickel sulfate was used as the solution for electrolytic polymerization instead of the aqueous solution including 0.2 M of pyrrole, 0.06 M of sodium dodecylbenzenesulfonate and 0.0003 M of sulfuric acid.

<u>Embodiment 3</u>

A solid electrolytic capacitor A3 (first capacitor) was fabricated in the same manner as in Embodiment 1 except that an aqueous solution including 0.2 M of pyrrole, 0.06 M of sodium dodecylbenzenesulfonate and 0.003 M of zinc sulfate was used as the solution for electrolytic polymerization instead of the aqueous solution including 0.2 M of pyrrole, 0.06 M of sodium dodecylbenzenesulfonate and 0.0003 M of sulfuric acid.

<u>Embodiment 4</u>

A solid electrolytic capacitor A4 (first capacitor) was fabricated in the same manner as in Embodiment 1 except that an aqueous solution including 0.2 M of N-methylpyrrole, 0.06 M of sodium dodecylbenzenesulfonate and 0.0003 M of sulfuric acid was used as the solution for electrolytic polymerization instead of the aqueous solution including 0.2 M of pyrrole, 0.06 M of sodium dodecylbenzenesulfonate and 0.0003 M of sulfuric acid.

<u>Embodiment 5</u>

A solid electrolytic capacitor A5 (first capacitor) was fabricated in the same manner as in Embodiment 1 except that an aqueous solution including 0.2 M of thiophene, 0.06 M of sodium dodecylbenzenesulfonate and 0.0003 M of sulfuric acid was used as the solution for electrolytic polymerization instead of the aqueous solution including 0.2 M of pyrrole, 0.06 M of sodium dodecylbenzenesulfonate and 0.0003 M of sulfuric acid.

<u>Embodiment 6</u>

A solid electrolytic capacitor A6 (first capacitor) was fabricated in the same manner as in Embodiment 1 except

that an aqueous solution including 0.2 M of N-methylthiophene, 0.06 M of sodium dodecylbenzenesulfonate and 0.0003 M of sulfuric acid was used as the solution for electrolytic polymerization instead of the aqueous solution including 0.2 M of pyrrole, 0.06 M of sodium dodecylbenzenesulfonate and 0.0003 M of sulfuric acid.

Comparative Example 1

A comparative capacitor B1 was fabricated in the same manner as in Embodiment 1 except that an aqueous solution including 0.2 M of pyrrole and 0.06 M of sodium borofluoride was used as the solution for electrolytic polymerization instead of the aqueous solution including 0.2 M of pyrrole, 0.06 M of sodium dodecylbenzenesulfonate and 0.0003 M of sulfuric acid.

Comparative Example 2

A comparative capacitor B2 was fabricated in the same manner as in Embodiment 1 except that an aqueous solution including 0.2 M of pyrrole and 0.06 M of sodium perchlorate was used as the solution for electrolytic polymerization instead of the aqueous solution including 0.2 M of pyrrole, 0.06 M of sodium dodecylbenzenesulfonate and 0.0003 M of sulfuric acid.

Comparative Example 3

A comparative capacitor B3 was fabricated in the same manner as in Embodiment 1 except that an aqueous solution including 0.2 M of pyrrole and 0.06 M of sodium dodecylbenzenesulfonate was used as the solution for electrolytic polymerization instead of the aqueous solution including 0.2 M of pyrrole, 0.06 M of sodium dodecylbenzenesulfonate and 0.0003 M of sulfuric acid.

Comparative Example 4

A comparative capacitor B4 was fabricated in the same manner as in Embodiment 1 except that an aqueous solution including 0.2 M of pyrrole and 0.06 M of sodium butylnaphthalenesulfonate was used as the solution for electrolytic polymerization instead of the aqueous solution including 0.2 M of pyrrole, 0.06 M of sodium dodecylbenzenesulfonate and 0.0003 M of sulfuric acid.

The compositions of the solutions for electrolytic polymerization used in Embodiments 1 through 6 and Comparative Examples 1 through 4 are shown in Table 1.

Table 1:

| Solid electrolytic capacitor | Composition of solution for electrolytic polymerization (M) | | | | | | | | | | |
|---|---|---|---|---|---|---|---|---|---|---|---|
| | Monomer | | | | Sodium dodecyl-benzene-sulfonate | Sulfuric acid | Nickel sulfate | Zinc sulfate | Sodium boro-fluoride | Sodium per-chlorate | Sodium butyl-naph-thalene-sulfonate |
| | Pyrrole | N-methyl-pyrrole | Thiophene | N-methyl-thiophene | | | | | | | |
| A1 | 0.2 | — | — | — | 0.06 | 0.0003 | — | — | — | — | — |
| A2 | 0.2 | — | — | — | 0.06 | — | 0.003 | — | — | — | — |
| A3 | 0.2 | — | — | — | 0.06 | — | — | 0.003 | — | — | — |
| A4 | — | 0.2 | — | — | 0.06 | 0.0003 | — | — | — | — | — |
| A5 | — | — | 0.2 | — | 0.06 | 0.0003 | — | — | — | — | — |
| A6 | — | — | — | 0.2 | 0.06 | 0.0003 | — | — | — | — | — |
| B1 | 0.2 | — | — | — | — | — | — | — | 0.06 | — | — |
| B2 | 0.2 | — | — | — | — | — | — | — | — | 0.06 | — |
| B3 | 0.2 | — | — | — | 0.06 | — | — | — | — | — | — |
| B4 | 0.2 | — | — | — | — | — | — | — | — | — | 0.06 |

Capacitance, capacitance lowering ratio and impedance after aging

The capacitance of the first capacitors A1 through A6 and the comparative capacitors B1 through B4 was measured at 120 Hz. Then, after keeping the capacitors at 200°C for 3 hours for aging, the capacitance at 120 Hz and impedance at 100 kHz were measured. Table 2 shows the capacitance at 120 Hz after the aging, a capacitance lowering ratio defined in accordance with the following formula (1) and the impedance at 100 kHz after the aging of each capacitor:

$$\text{Capacitance lowering ratio (\%)} = \{(C1- C2) / C1\} \times 100 \qquad (1)$$

wherein C1 indicates the capacitance at 120 Hz before aging and C2 indicates the capacitance at 120 Hz after aging.

Table 2:

| Solid electrolytic capacitor | Capacitance (μF) | Capacitance lowering ratio (%) | Impedance (mΩ) |
|---|---|---|---|
| A1 | 150 | 0.6 | 29 |
| A2 | 160 | 0.2 | 21 |
| A3 | 159 | 0.4 | 23 |
| A4 | 151 | 0.7 | 29 |
| A5 | 152 | 0.5 | 35 |
| A6 | 151 | 0.5 | 30 |
| B1 | 140 | 7.8 | 300 |
| B2 | 140 | 9.7 | 330 |
| B3 | 150 | 3.0 | 90 |
| B4 | 150 | 2.9 | 89 |

As is shown in Table 2, the first capacitors A1 through A6 have larger capacitance, smaller capacitance lowering ratios and lower impedance than the comparative capacitors B1 through B4.
Tantalum was used as the material for the anode in Embodiments 1 through 6, but also when aluminum is used as the material for the anode, a solid electrolytic capacitor having large capacitance and exhibiting small impedance in a high frequency region can be similarly obtained.
Although sodium dodecylbenzenesulfonate was used in Embodiments 1 through 6, any metal salt other than sodium salt can be used instead, or an ammonium salt (such as quaternary ammonium salt) can be used instead of the metal salt.
Although water was used as a solvent for the solution for electrolytic polymerization in Embodiments 1 through 6, any solvent can be used as far as the heterocyclic monomer and the dopant can be dissolved therein.

Embodiment 7

Porous sintered tantalum was subjected to anodic oxidation, thereby forming a dielectric film of tantalum oxide on the surface thereof. Then, the sintered tantalum bearing the dielectric film thereon was immersed in an aqueous solution including 20 wt% of hydrogen peroxide (oxidizing agent) and 1 wt% of sulfuric acid for 30 minutes, taken out of the solution, dried for 5 minutes at room temperature, and exposed to pyrrole vapor for 30 minutes, thereby forming a polypyrrole film (vapor phase polymerized film) on the dielectric film. Since this polypyrrole film is doped with sulfuric acid ions, the polypyrrole film is provided with a conducting property. Subsequently, the sintered tantalum bearing the polypyrrole film formed on the dielectric film was immersed in a solution for electrolytic polymerization (an aqueous solution including 0.2 M of pyrrole, 0.06 M of sodium butylnaphthalenesulfonate and 0.0003 M of sulfuric acid), so as to be subjected to electrolytic polymerization (electrolytic oxidative polymerization) at a constant current, with a lead (anode) of stainless steel fixed on the polypyrrole film. Thus, a solid electrolytic layer of a conducting polymer obtained by doping polypyrrole with butylnaphthalene sulfonic acid ions and sulfuric acid ions was formed on the polypyrrole film. Also as a counter electrode (cathode), a stainless steel electrode was used. Next, after the sintered tantalum bearing the solid electrolytic layer formed on the polypyrrole film was washed with water and dried, a carbon paste and a silver paste were successively applied on the solid electrolytic layer in this order. The silver paste was provided with a cathode terminal of aluminum, a terminal portion (bare portion) of the sintered tantalum was provided with an anode terminal of aluminum, and a main body of the resultant capacitor excluding portions for taking out electric energy of the cathode terminal and the anode terminal was housed in an epoxy resin. Thus, a solid electrolytic capacitor C1

(second capacitor) having the same structure as the solid electrolytic capacitor A1 fabricated in Embodiment 1 except for the solid electrolytic layer was fabricated.

Embodiment 8

A solid electrolytic capacitor C2 (second capacitor) was fabricated in the same manner as in Embodiment 7 except that an aqueous solution including 0.2 M of pyrrole, 0.06 M of sodium butylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 9

A solid electrolytic capacitor C3 (second capacitor) was fabricated in the same manner as in Embodiment 7 except that an aqueous solution including 0.2 M of pyrrole, 0.06 M of sodium butylnaphthalenesulfonate and 0.003 M of zinc sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 10

A solid electrolytic capacitor C4 (second capacitor) was fabricated in the same manner as in Embodiment 7 except that an aqueous solution including 0.2 M of N-methylpyrrole, 0.06 M of sodium butylnaphthalenesulfonate and 0.0003 M of sulfuric acid was used as the solution for electrolytic polymerization instead of the aqueous solution including 0.2 M of pyrrole, 0.06 M of sodium butylnaphthalenesulfonate and 0.0003 M of sulfuric acid.

Embodiment 11

A solid electrolytic capacitor C5 (second capacitor) was fabricated in the same manner as in Embodiment 7 except that an aqueous solution including 0.2 M of thiophene, 0.06 M of sodium butylnaphthalenesulfonate and 0.0003 M of sulfuric acid was used as the solution for electrolytic polymerization instead of the aqueous solution including 0.2 M of pyrrole, 0.06 M of sodium butylnaphthalenesulfonate and 0.0003 M of sulfuric acid.

Embodiment 12

A solid electrolytic capacitor C6 (second capacitor) was fabricated in the same manner as in Embodiment 7 except that an aqueous solution including 0.2 M of N-methylthiophene, 0.06 M of sodium butylnaphthalenesulfonate and 0.0003 M of sulfuric acid was used as the solution for electrolytic polymerization instead of the aqueous solution including 0.2 M of pyrrole, 0.06 M of sodium butylnaphthalenesulfonate and 0.0003 M of sulfuric acid.

Embodiment 13

A solid electrolytic capacitor C7 (second capacitor) was fabricated in the same manner as in Embodiment 7 except that an aqueous solution including 0.2 M of pyrrole, 0.06 M of sodium pentylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 14

A solid electrolytic capacitor C8 (second capacitor) was fabricated in the same manner as in Embodiment 7 except that an aqueous solution including 0.2 M of pyrrole, 0.06 M of sodium hexylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 15

A solid electrolytic capacitor C9 (second capacitor) was fabricated in the same manner as in Embodiment 7 except that an aqueous solution including 0.2 M of pyrrole, 0.06 M of sodium heptylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 16

A solid electrolytic capacitor C10 (second capacitor) was fabricated in the same manner as in Embodiment 7 except that an aqueous solution including 0.2 M of pyrrole, 0.06 M of sodium octylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 17

A solid electrolytic capacitor C11 (second capacitor) was fabricated in the same manner as in Embodiment 7 except that an aqueous solution including 0.2 M of pyrrole, 0.06 M of sodium norylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 18

A solid electrolytic capacitor C12 (second capacitor) was fabricated in the same manner as in Embodiment 7 except that an aqueous solution including 0.2 M of pyrrole, 0.06 M of sodium decylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 19

A solid electrolytic capacitor C13 (second capacitor) was fabricated in the same manner as in Embodiment 7 except that an aqueous solution including 0.2 M of pyrrole, 0.06 M of sodium undecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 20

A solid electrolytic capacitor C14 (second capacitor) was fabricated in the same manner as in Embodiment 7 except that an aqueous solution including 0.2 M of pyrrole, 0.06 M of sodium dodecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 21

A solid electrolytic capacitor C15 (second capacitor) was fabricated in the same manner as in Embodiment 7 except that an aqueous solution including 0.2 M of pyrrole, 0.06 M of sodium tridecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 22

A solid electrolytic capacitor C16 (second capacitor) was fabricated in the same manner as in Embodiment 7 except that an aqueous solution including 0.2 M of pyrrole, 0.06 M of sodium tetradecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 23

A solid electrolytic capacitor C17 (second capacitor) was fabricated in the same manner as in Embodiment 7 except that an aqueous solution including 0.2 M of pyrrole, 0.06 M of sodium pentadecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 24

A solid electrolytic capacitor C18 (second capacitor) was fabricated in the same manner as in Embodiment 7 except that an aqueous solution including 0.2 M of pyrrole, 0.06 M of sodium hexadecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 25

A solid electrolytic capacitor C19 (second capacitor) was fabricated in the same manner as in Embodiment 7 except that an aqueous solution including 0.2 M of pyrrole, 0.06 M of sodium heptadecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 26

A solid electrolytic capacitor C20 (second capacitor) was fabricated in the same manner as in Embodiment 7 except that an aqueous solution including 0.2 M of pyrrole, 0.06 M of sodium octadecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 27

A solid electrolytic capacitor C21 (second capacitor) was fabricated in the same manner as in Embodiment 7 except that an aqueous solution including 0.2 M of pyrrole, 0.06 M of sodium nonadecylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 28

A solid electrolytic capacitor C22 (second capacitor) was fabricated in the same manner as in Embodiment 7 except that an aqueous solution including 0.2 M of pyrrole, 0.06 M of sodium icosylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 29

A solid electrolytic capacitor C23 (second capacitor) was fabricated in the same manner as in Embodiment 7 except that an aqueous solution including 0.2 M of pyrrole, 0.06 M of sodium henicosylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 30

A solid electrolytic capacitor C24 (second capacitor) was fabricated in the same manner as in Embodiment 7 except that an aqueous solution including 0.2 M of pyrrole, 0.06 M of sodium docosylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 31

A solid electrolytic capacitor C25 (second capacitor) was fabricated in the same manner as in Embodiment 7 except that an aqueous solution including 0.2 M of pyrrole, 0.06 M of sodium tricosylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.

Embodiment 32

A solid electrolytic capacitor C26 (second capacitor) was fabricated in the same manner as in Embodiment 7 except that an aqueous solution including 0.2 M of pyrrole, 0.06 M of sodium tetracosylnaphthalenesulfonate and 0.003 M of nickel sulfate was used as the solution for electrolytic polymerization instead of the aqueous solution including 0.2 M of pyrrole, 0.06 M of sodium butylnaphthalenesulfonate and 0.0003 M of sulfuric acid.
The compositions of the solutions for electrolytic polymerization used in Embodiments 7 through 32 are shown in Tables 3 and 4.

Table 3:

| Solid electrolytic capacitor | Composition of solution for electrolytic polymerization (M) | | | | | | | | | | |
|---|---|---|---|---|---|---|---|---|---|---|---|
| | Monomer | | | | | | | | | | |
| | Pyrrole | N-methyl-pyrrole | Thiophene | N-methyl-thiophene | Sodium alkyl-naph-thalene-sulfonate | Sulfuric acid | Nickel sulfate | Zinc sulfate | Sodium boro-fluoride | Sodium per-chlorate | Sodium dodecyl-benzene-sulfonate |
| C1 | 0.2 | — | — | — | 0.06 | 0.0003 | — | — | — | — | — |
| C2 | 0.2 | — | — | — | 0.06 | — | 0.003 | — | — | — | — |
| C3 | 0.2 | — | — | — | 0.06 | — | — | 0.003 | — | — | — |
| C4 | — | 0.2 | — | — | 0.06 | 0.0003 | — | — | — | — | — |
| C5 | — | — | 0.2 | — | 0.06 | 0.0003 | — | — | — | — | — |
| C6 | — | — | — | 0.2 | 0.06 | 0.0003 | — | — | — | — | — |
| C7 | 0.2 | — | — | — | 0.06 | — | 0.003 | — | — | — | — |
| C8 | 0.2 | — | — | — | 0.06 | — | 0.003 | — | — | — | — |
| C9 | 0.2 | — | — | — | 0.06 | — | 0.003 | — | — | — | — |
| C10 | 0.2 | — | — | — | 0.06 | — | 0.003 | — | — | — | — |
| C11 | 0.2 | — | — | — | 0.06 | — | 0.003 | — | — | — | — |
| C12 | 0.2 | — | — | — | 0.06 | — | 0.003 | — | — | — | — |
| C13 | 0.2 | — | — | — | 0.06 | — | 0.003 | — | — | — | — |
| C14 | 0.2 | — | — | — | 0.06 | — | 0.003 | — | — | — | — |
| C15 | 0.2 | — | — | — | 0.06 | — | 0.003 | — | — | — | — |

Table 4:

| Solid electrolytic capacitor | Composition of solution for electrolytic polymerization (M) | | | | | | | | | | |
|---|---|---|---|---|---|---|---|---|---|---|---|
| | Monomer | | | | | | | | | | |
| | Pyrrole | N-methyl-pyrrole | Thiophene | N-methyl-thiophene | Sodium alkyl-naph-thalene-sulfonate | Sulfuric acid | Nickel sulfate | Zinc sulfate | Sodium boro-fluoride | Sodium per-chlorate | Sodium dodecyl-benzene-sulfonate |
| C16 | 0.2 | — | — | — | 0.06 | — | 0.003 | — | — | — | — |
| C17 | 0.2 | — | — | — | 0.06 | — | 0.003 | — | — | — | — |
| C18 | 0.2 | — | — | — | 0.06 | — | 0.003 | — | — | — | — |
| C19 | 0.2 | — | — | — | 0.06 | — | 0.003 | — | — | — | — |
| C20 | 0.2 | — | — | — | 0.06 | — | 0.003 | — | — | — | — |
| C21 | 0.2 | — | — | — | 0.06 | — | 0.003 | — | — | — | — |
| C22 | 0.2 | — | — | — | 0.06 | — | 0.003 | — | — | — | — |
| C23 | 0.2 | — | — | — | 0.06 | — | 0.003 | — | — | — | — |
| C24 | 0.2 | — | — | — | 0.06 | — | 0.003 | — | — | — | — |
| C25 | 0.2 | — | — | — | 0.06 | — | 0.003 | — | — | — | — |
| C26 | 0.2 | — | — | — | 0.06 | — | 0.003 | — | — | — | — |

Capacitance, capacitance lowering ratio and impedance after aging

The capacitance of the second capacitors C1 through C26 was measured at 120 Hz. Then, after keeping the capacitors at 200°C for 3 hours for aging, the capacitance at 120 Hz and impedance at 100 kHz were measured. Table 5 shows the electrostatic capacitance at 120 Hz after the aging, a capacitance lowering ratio defined in accordance with the above-described formula (1) and the impedance at 100 kHz after the aging of each capacitor.

Table 5:

| Solid electrolytic capacitor | Capacitance (μF) | Capacitance lowering ratio (%) | Impedance (mΩ) |
|---|---|---|---|
| C1 | 155 | 0.7 | 30 |
| C2 | 180 | 0.3 | 19 |
| C3 | 175 | 0.5 | 25 |
| C4 | 163 | 0.9 | 31 |
| C5 | 153 | 0.5 | 40 |
| C6 | 150 | 0.5 | 31 |
| C7 | 182 | 0.3 | 19 |
| C8 | 183 | 0.3 | 18 |
| C9 | 185 | 0.3 | 17 |
| C10 | 185 | 0.2 | 15 |
| C11 | 187 | 0.2 | 15 |
| C12 | 190 | 0.2 | 14 |
| C13 | 192 | 0.2 | 14 |
| C14 | 193 | 0.2 | 14 |
| C15 | 193 | 0.2 | 12 |
| C16 | 194 | 0.2 | 12 |
| C17 | 193 | 0.2 | 13 |
| C18 | 190 | 0.2 | 13 |
| C19 | 190 | 0.2 | 15 |
| C20 | 188 | 0.2 | 15 |
| C21 | 187 | 0.2 | 15 |
| C22 | 185 | 0.2 | 16 |
| C23 | 181 | 0.2 | 17 |
| C24 | 175 | 0.3 | 18 |
| C25 | 172 | 0.3 | 20 |
| C26 | 165 | 0.3 | 21 |

As is shown in Table 5, the second capacitors C1 through C26 have larger capacitance, smaller capacitance lowering ratios and lower impedance than the comparative capacitors B1 through B4 shown in Table 2 above.

Tantalum was used as the material for the anode in Embodiments 7 through 32, but also when aluminum is used as the material for the anode, a solid electrolytic capacitor having large capacitance and exhibiting small impedance in a high frequency region can be similarly obtained.

Although sodium alkylnaphthalenesulfonate was used in Embodiments 7 through 32, any metal salt other than sodium salt can be used instead, or an ammonium salt (such as quaternary ammonium salt) can be used instead of the metal salt.

Although water was used as a solvent for the solution for electrolytic polymerization in Embodiments 7 through 32, any solvent can be used as far as the heterocyclic monomer and the dopant can be dissolved therein.

Industrial Applicability

The invention provides a solid electrolytic capacitor having large capacitance and exhibiting low impedance in a high frequency region.

## Claims

**1.** A solid electrolytic capacitor comprising:

an anode;
a dielectric film formed on the anode by anodic oxidation;
a solid electrolytic layer formed on the dielectric film; and
a cathode connected with the solid electrolytic layer,
the solid electrolytic layer being made from a conducting polymer obtained by doping, with dodecylbenzene sulfonic acid ions and sulfuric acid ions, a polymer that includes a heterocyclic monomer unit represented by the following general formula as a repeating unit:

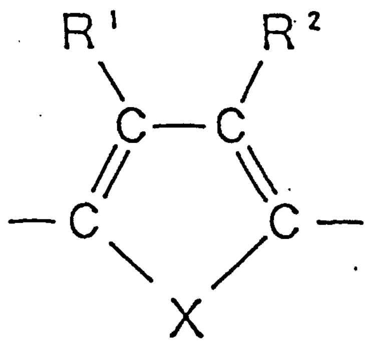

wherein $R^1$ and $R^2$ independently indicate an alkyl group or H and X indicates S or $NR^3$ (wherein $R^3$ indicates an alkyl group or H).

**2.** The solid electrolytic capacitor according to Claim 1,
wherein the polymer is doped in a ratio of one of the dodecylbenzene sulfonic acid ions and the sulfuric acid ions per 2 through 5 heterocyclic monomer units represented by the general formula.

**3.** The solid electrolytic capacitor according to Claim 1,
wherein a molar ratio between the dodecylbenzene sulfonic acid ions and the sulfuric acid ions is 10:1 through 0.1:10.

**4.** The solid electrolytic capacitor according to any of Claims 1 through 3,
wherein the anode and the cathode are made from aluminum or tantalum.

**5.** A solid electrolytic capacitor comprising:

an anode;
a dielectric film formed on the anode by anodic oxidation;
a solid electrolytic layer formed on the dielectric film; and
a cathode connected with the solid electrolytic layer,
the solid electrolytic layer being made from a conducting polymer obtained by doping, with alkylnaphthalene sulfonic acid ions with a carbon number of an alkyl group of 4 through 24 and sulfuric acid ions, a polymer that includes a heterocyclic monomer unit represented by the following general formula as a repeating unit:

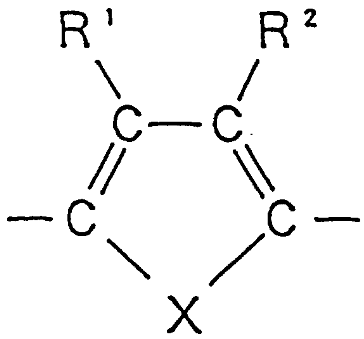

wherein $R^1$ and $R^2$ independently indicate an alkyl group or H and X indicates S or $NR^3$ (wherein $R^3$ indicates an alkyl group or H).

**6.** The solid electrolytic capacitor according to Claim 5,
wherein the polymer is doped in a ratio of one of the alkylnaphthalene sulfonic acid ions and the sulfuric acid ions per 2 through 5 heterocyclic monomer units represented by the general formula.

**7.** The solid electrolytic capacitor according to Claim 5,
wherein a molar ratio between the alkylnaphthalene sulfonic acid ions and the sulfuric acid ions is 10:1 through 0.1:10.

**8.** The solid electrolytic capacitor according to any of Claims 5 through 7, wherein the anode and the cathode are made from aluminum or tantalum.

Fig. 1

A 1 (Solid Electrolytic Capacitor)

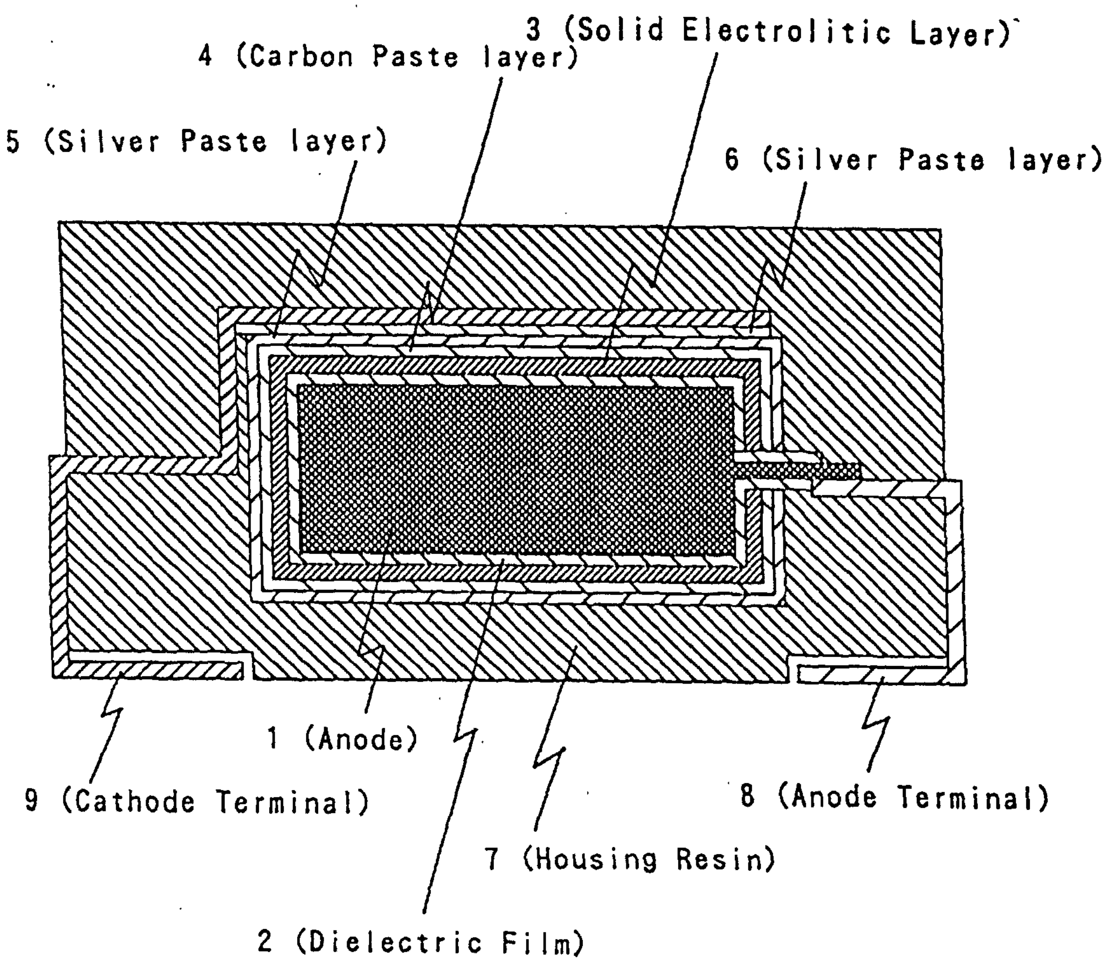

## INTERNATIONAL SEARCH REPORT

International application No.
PCT/JP99/06095

A. CLASSIFICATION OF SUBJECT MATTER
Int.Cl$^7$ H01G 9/028

According to International Patent Classification (IPC) or to both national classification and IPC

B. FIELDS SEARCHED

Minimum documentation searched (classification system followed by classification symbols)
Int.Cl$^7$ H01G 9/028

Documentation searched other than minimum documentation to the extent that such documents are included in the fields searched
Jitsuyo Shinan Koho 1926-1996 Jitsuyo Shinan Toroku Koho 1996-1999
Kokai Jitsuyo Shinan Koho 1971-1999 Toroku Jitsuyo Shinan Koho 1994-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP, 9-74050, A (Matsushita Electric Ind. Co., Ltd.), 18 March, 1997 (18.03.97)<br>& US, 5812367, A & EP, 803886, A2 | 1,4,5,7,8<br>2,3,6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 January, 2000 (19.01.00) | 01 February, 2000 (01.02.00) |
| Name and mailing address of the ISA/<br>Japanese Patent Office | Authorized officer |
| Facsimile No. | Telephone No. |

Form PCT/ISA/210 (second sheet) (July 1992)